# EUROPEAN PATENT APPLICATION

(11) **EP 4 678 263 A1**
(43) Date of publication of application: **14.01.2026**
(21) Application number: 23926217.3
(22) Date of filing: 06.03.2023
(51) Int. Cl.: B01D 35/02

(54) **FILTER**

(71) Applicant: ThinkCyte K.K., Tokyo 113-0033 (JP)
(72) Inventor: KAWAMURA, Yoko, Tokyo 113-0033 (JP)
(74) Representative: Gramm, Lins & Partner Patent- und Rechtsanwälte PartGmbB
(86) International application number: PCT/JP2023/008308
(87) International publication number: WO 2024/185003

(57) **Abstract**

A filter includes an inlet through which a liquid is introduced, an outlet through which the liquid is discharged, a flow path through which the liquid flows from the inlet to the outlet, a first filter portion (for example, an A filter portion) which is a filter portion configured to remove contaminants from the liquid and is disposed in a first flow path that is the flow path, and a second filter portion (a B filter portion to a J filter portion) which is filter portion and is disposed in a second flow path that is the flow path at least partially different from the first flow path, wherein the first flow path and the second flow path have different flow path resistances.

## Description

### TECHNICAL FIELD

The present invention relates to a filter.

### BACKGROUND ART

Conventionally, a flow cytometry method in which an observation object is fluorescently stained and characteristics of the observation object are evaluated based on a total amount of fluorescent intensity, and a flow cytometer using the flow cytometry method are known (for example, refer to Patent Document 1). The flow cytometer is an instrument to measure the characteristics of particles in which the characteristics of particles are measured by radiating illumination light, such as laser light, onto the particles, such as cells, suspended in a liquid moving through a flow path, and detecting resulting interactions between the particles and light, such as light scattering.

### Citation List

### Patent Document

Patent Document 1: Japanese Unexamined Patent Application, First Publication No. 2022-14213

### SUMMARY OF INVENTION

### Technical Problem

Conventionally, in measurements using the flow cytometer, in order to prevent clogging of the thin flow path by foreign material other than the observation object or contents that have leaked from the observation object (collectively, referred to as contaminants) and to perform measurements stably over long periods of time, for example, a filter has been installed in the flow path through which the liquid flows and the contaminants have been removed by filtering the liquid through the filter.

However, in conventional filters, when the inlet side of the filter becomes clogged with the contaminants first, the flow of liquid will be obstructed by the clogged contaminants, and there is a risk that a filter's effect of removing contaminants will decrease in a short period of time. Furthermore, since the flow of liquid is obstructed by the clogged contaminants, there is a risk that the filter will need to be replaced many times in a short period of time in the measurements.

In particular, in a flow cytometer in which a trained model is created in advance by machine learning and an observation object is discriminated using the trained model, it is preferable that measurements can be continuously performed on a training sample and a test sample, and thus there has been a demand for a filter that does not lose the effect of removing contaminants over a long period of time and allows measurements to be performed continuously without the need for filter replacement.

The present invention has been made in consideration of the above-described points and provides a filter capable of maintaining an effect of removing contaminants for a longer period of time than the conventional filters.

### Solution to Problem

The present invention has been made to solve the above problems, and a filter according to a first aspect of the present disclosure includes an inlet through which a liquid is introduced, an outlet through which the liquid is discharged, a flow path through which the liquid flows from the inlet to the outlet, a first filter portion which is a filter portion configured to remove contaminants from the liquid and is disposed in a first flow path that is the flow path, and a second filter portion which is a filter portion and is disposed in a second flow path that is the flow path at least partially different from the first flow path, wherein the first flow path and the second flow path have different flow path resistances.

According to a second aspect of the present disclosure, in the filter according to the first aspect, the flow path may include an inflow path that connects the inlet and the filter portion, the inflow path may include a first inflow path disposed in the first flow path and extends in a direct flow direction that connects the inlet and the outlet, and a second inflow path disposed in the second flow path and configured to branch from the first inflow path and to extend substantially perpendicular to the direct flow direction, and the first filter portion and the second filter portion may be disposed in parallel in a direction in which the second inflow path extends.

According to a third aspect of the present disclosure, in the filter according to the second aspect, the first filter portion and the second filter portion may be the same filter portion.

According to a fourth aspect of the present disclosure, in the filter according to the third aspect, the second flow path may be constituted by a plurality of detour flow paths having different flow path resistances, and the second filter portions may be installed in parallel with each other in the direction in which the second inflow path extends in each of the plurality of detour flow paths.

According to a fifth aspect of the present disclosure, in the filter according to the fourth aspect, the filter portion may have two or more standing members that extend substantially perpendicular to a flow direction of the liquid that flows through the filter portion.

According to a sixth aspect of the present disclosure, in the filter according to the fifth aspect, the plurality of second filter portions provided in the plurality of detour flow paths may be the same as each other, and the plurality of second inflow paths that connect the inlet and the plurality of second filter portions may have the same area of cross sections perpendicular to a flow direction of the liquid flowing through the second flow paths, and may have different lengths in the flow direction.

According to a seventh aspect of the present disclosure, in the filter according to the first aspect, an inflow path that connects the inlet and the filter portion may be provided, and an area of a cross section of the inflow path perpendicular to a flow direction of the liquid may be smaller than an area of a cross section of the filter portion perpendicular to the flow direction of the liquid.

According to an eighth aspect of the present disclosure, in the filter according to the sixth or seventh aspect, a shape of a cross section of the inflow path may be a quadrangle, and a width of the cross section of the inflow path may be 0.1 mm or more and 1.0 mm or less.

According to a ninth aspect of the present disclosure, in the filter according to the eighth aspect, a width of the filter portion may be 0.1 mm or more and 3 mm or less.

According to a tenth aspect of the present disclosure, in the filter according to the first aspect, the filter portion may have two or more standing members that extend substantially perpendicular to a flow direction of the liquid flowing through the filter portion, and a distance between the adjacent standing members may be 20 µm or more and 50 µm or less.

According to an eleventh aspect of the present disclosure, in the filter according to the first aspect, the filter portion may have two or more standing members that extend substantially perpendicular to a flow direction of the liquid flowing through the filter portion, and the standing members may have a substantially cylindrical shape with a diameter of 10 µm or more and 200 µm or less.

According to a twelfth aspect of the present disclosure, in the filter according to the first aspect, the first flow path may be a linear flow path in which the liquid flows linearly from the inlet to the outlet, and the second flow path may be a detour flow path in which the liquid flows from the inlet to the outlet by bypassing the linear flow path, and is a flow path through which the liquid flows over a longer distance than the first flow path.

According to a thirteenth aspect of the present disclosure, in the filter according to the first aspect, the first flow path and the second flow path may be detour flow paths in which the liquid flows from the inlet to the outlet by bypassing a linear flow path in which the liquid flows linearly from the inlet to the outlet.

### Advantageous Effects of Invention

According to the present invention, it is possible to provide a filter capable of maintaining the effect of removing contaminants for a longer period of time than conventional filters.

### BRIEF DESCRIPTION OF DRAWINGS

[FIG. 1] A front view showing an example of a configuration of a filter according to an embodiment.
[FIG. 2] A perspective view showing a microtrap of the filter according to the embodiment schematically.
[FIG. 3] A front view showing an example of a configuration of a filter according to Modified examples 1 to 3.
[FIG. 4] A front view showing a configuration of a filter of a comparative example.
[FIG. 5] An image showing an observation result at the end of an experiment of the filter of the embodiment.
[FIG. 6] An image showing an observation result at the end of an experiment of the filter of the comparative example.

### DESCRIPTION OF EMBODIMENTS

An embodiment of the present disclosure will be described with reference to the drawings.

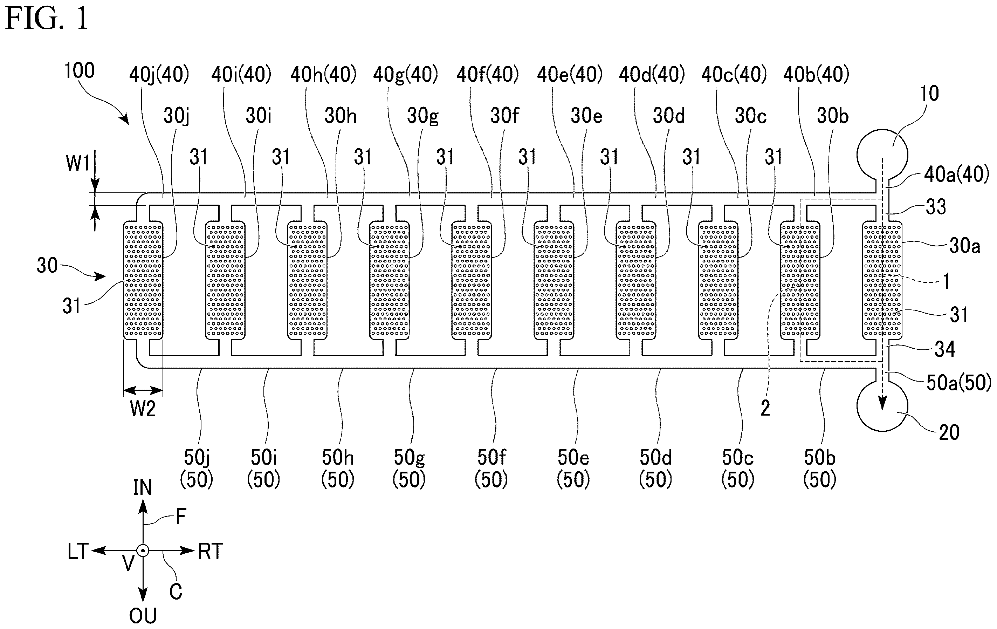

FIG. 1 is a front view showing an example of a configuration of a filter 100 according to the embodiment. The filter 100 is a device that removes contaminants from a liquid flowing through a flow path in a flow cytometer. For example, the filter 100 is incorporated into the flow path of the flow cytometer and is used as a filter for removing contaminants other than an object to be measured from a liquid containing the observation object, such as cells, flowing through the flow path when measurements are performed with the flow cytometer. Here, the contaminant refers to, for example, impurities contained in an observation sample, such as foreign material other than the observation object or contents that have leaked from the observation object (for example, nucleic acid aggregates when the observation object is a cell).

Moreover, the filter 100 is, for example, a filter in which a plate (a flow path plate) which has a flow path through which a liquid flows and a plate (a lid) which has an inlet for injecting a liquid from the flow path and an outlet for pouring the liquid into the flow path are joined together to form the flow path between the two plates. The plates forming the filter 100 are made of a transparent material (for example, glass, quartz, or a synthetic resin such as polydimethylsiloxane (PDMS)) that allows observation of the internal flow path. The plates forming the filter 100 are not limited to being made of a transparent material, and may be made of a translucent material or a non-transparent material.

The filter 100 includes an inlet 10, an outlet 20, a filter portion 30, an inflow path 40, and an outflow path 50. A liquid flowing through the filter 100 is introduced from the inlet 10 and is discharged from the outlet 20.

The filter 100 also has a flow path through which a liquid flows from the inlet 10 to the outlet 20. The flow path of the filter 100 includes the filter portion 30, the inflow path 40 that connects the inlet 10 and the filter portion 30, and the outflow path 50 that connects the filter portion 30 and the outlet 20.

In the embodiment, directions are defined as shown in FIG. 1. As shown in FIG. 1, a direction in which the inlet 10 and the outlet 20 are connected is defined as a "direct flow direction F", a direction in which the inlet 10 is disposed is defined as the "inlet side IN" in the direct flow direction F, and a direction in which the outlet 20 is disposed is defined as the "outlet side OU" in the direct flow direction F. In addition, a direction in which two or more filter portions 30 are arranged is defined as a "lateral direction C," a direction in which the inlet 10 and the outlet 20 are disposed is defined as the "right side RT" in the lateral direction C, and an opposite direction thereto is defined as the "left side LT" in the lateral direction C. In addition, a direction perpendicular to the direct flow direction F and the lateral direction C is defined as a "up-down direction V," one side in the up-down direction V is defined as the "upper side UP" and the other side is defined as the "lower side LO."

The inlet 10 is an entrance through which a liquid is introduced into the filter 100. The inlet 10 has a circular shape when seen from the upper side UP in FIG. 1 and is large enough to allow the liquid to be introduced into the filter 100. The shape of the inlet 10 is not limited to the circular shape, and may be, for example, a polygonal shape such as a quadrangle when seen from the upper side UP.

The outlet 20 is an exit through which the liquid is discharged from the filter 100. The outlet 20 has a circular shape when seen from the upper side UP in FIG. 1 and is large enough to allow the liquid to be discharged from the filter 100. The shape of the outlet 20 is not limited to the circular shape, and may be, for example, a polygonal shape such as a quadrangle when seen from the upper side UP. When the filter 100 is used for a pretreatment of a liquid to be measured by the flow cytometer, the outlet 20 is connected to a flow path within the flow cytometer. For example, the liquid discharged from the outlet 20 is introduced into the flow path within the flow cytometer, contaminants are removed, and only the object to be measured is optically measured.

The filter portion 30 is a portion for removing contaminants from the liquid flowing from the inlet 10 to the outlet 20 and is disposed in the flow path through which the liquid flows from the inlet 10 to the outlet 20. As shown in FIG. 1, in the embodiment, the filter 100 includes ten filter portions 30 including A filter portion 30a to J filter portion 30j arranged in parallel in the lateral direction C from the right side RT to the left side LT, starting with the A filter portion 30a. Each of the filter portions 30 also has a microtrap 31 that has a function of removing contaminants from the liquid.

In FIG. 1, for the sake of explanation, the example is shown in which a plurality of filter portions are disposed in parallel from the right side RT to the left side LT, but the installation direction is not limited thereto. For example, the plurality of filter portions of the filter 100 may be installed in parallel from the left side LT to the right side RT.

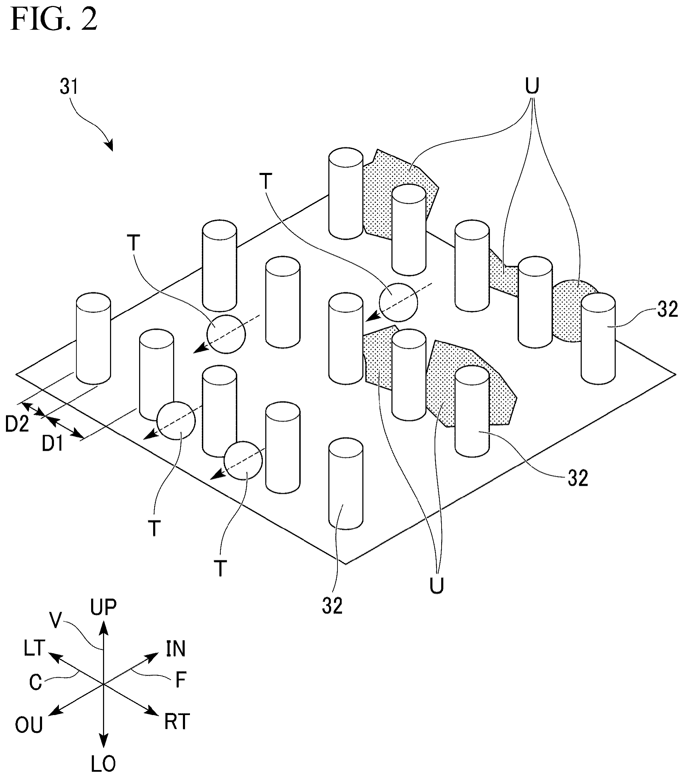

FIG. 2 is a perspective view showing the microtrap 31 included in the filter portion 30 schematically. The microtrap 31 has two or more standing members 32 that extend in the up-down direction V.

In the embodiment, a direction (a flow direction) in which the liquid flows through the filter portion 30 coincides with the direct flow direction F. The standing members 32 extend perpendicular to the flow direction F (the direct flow direction F) in which the liquid flows through the filter portion 30.

The microtrap 31 removes contaminants U from the liquid by causing the contaminants U to be caught by the standing members 32 and remain in place. The liquid and the observation objects T, such as cells, suspended therein, pass through between the standing members 32 and are not removed.

When the observation object T is a cell, a size of the observation object T is often about 10 to 20 µm, and in this case, a distance D1 between the adjacent standing members 32 is preferably 20 µm or more and 60 µm or less. By setting the distance D1 between the adjacent standing members 32 to be larger than the size of the observation object T and smaller than the size of the contaminants U to be removed, the microtrap 31 may allow the observation object T to pass through and catch and remove only the contaminants U. The distance D1 between the adjacent standing members 32 may be changed appropriately depending on the observation object T. For example, in the case of bacteria, a size of about 5 µm to 10 µm is preferable, and in the case of very large cells such as ova, a size of about 100 µm to 150 µm is preferable. Moreover, preferably, the standing member 32 has a cylindrical shape with a diameter D2 of 10 µm or more and 200 µm or less.

The shape, distance D1, diameter D2, range of placement, placement position, number of placements, and the like of the standing members 32 may be changed as appropriate according to the sizes of the observation object T and the contaminants U. For example, although the shape of the standing member 32 is shown as the cylindrical shape in FIG. 2, it may also be a quadrangular column.

A material of the standing member 32 may be, for example, glass, quartz, a silicon resin such as PDMS, a metal, or germanium.

Further, as shown in FIG. 1, the filter portion 30 has a filter inlet portion 33 and a filter outlet portion 34. The filter portion 30 has portions on the inlet side IN and the outlet side OU of which widths in the lateral direction C are narrower than a width of the microtrap 31. Among the portions, the one disposed on the inlet side IN is the filter inlet portion 33, and the one disposed on the outlet side OU is the filter outlet portion 34.

The inflow path 40 is a portion (a flow path) that connects the inlet 10 and the filter portion 30. The liquid introduced through the inlet 10 passes through the inflow path 40 and is then introduced into the filter portion 30.

For example, in FIG. 1, the inflow path 40 has A inflow path 40a to J inflow path 40j, and the A inflow path 40a is connected to the A filter portion 30a. The B inflow path 40b extends to the left side LT from the A inflow path 40a, branches off, and is connected to the B filter portion 30b. Similarly, the C inflow path 40c to the J inflow path 40j are connected to the C filter portion 30c to the J filter portion 30j, respectively.

The A inflow path 40a extends in the direct flow direction F from the inlet 10 to the outlet side OU. The B inflow path 40b to the J inflow path 40j extend in the lateral direction C perpendicular to the direct flow direction F that connects the inlet 10 and the outlet 20. The B inflow path 40b to the J inflow path 40j have flow paths that partially overlap each other.

The A filter portion 30a, the B filter portion 30b and the C filter portion 30c to the J filter portion 30j of the filter portion 30 are disposed in parallel in the direction (the lateral direction C) in which the B inflow path 40b to the J inflow paths 40j extend.

The outflow path 50 is a portion (a flow path) that connects the filter portion 30 and the outlet 20. The liquid introduced from the inlet 10 flows through the inflow path 40 and the filter portion 30 in this order, is introduced from the filter portion 30 into the outflow path 50, passes through the outflow path 50 and flows to the outlet 20. Then, the liquid is discharged from the outlet 20.

For example, in FIG. 1, the outflow paths 50 have an A outflow path 50a to a J outflow path 50j, and the A outflow path 50a extends from the outlet 20 and is connected to the A filter portion 30a. The B outflow path 50b branches off from the A outflow path 50a to extend to the left side LT and is connected to the B filter portion 30b. Similarly, the C outflow path 50c to the J outflow path 50j branch off from the A outflow path 50a to extend to the left side LT, and are connected to the C filter portion 30c to the J filter portion 30j, respectively.

The A outflow path 50a extends in the direct flow direction F from the A filter portion 30a to the outlet side OU. The B outflow path 50b to the J outflow path 50j extend in the lateral direction C perpendicular to the direct flow direction F that connects the inlet 10 and the outlet 20. The B outflow path 50b to the J outflow path 50j have flow paths that partially overlap each other.

Widths (dimensions in the lateral direction C) of the filter inlet portion 33 and the filter outlet portion 34 in the filter portion 30 are set to be approximately the same width as the inflow path 40 in FIG. 1, although the dimensions are not limited thereto. Further, the widths of the filter inlet portion 33 and the filter outlet portion 34 are set to be approximately the same as the width of the outflow path 50 in FIG. 1, although the dimensions are not limited thereto.

Next, the flow paths through which liquid flows in the filter 100 will be described.

The filter 100 has a first flow path and a second flow path that is at least partially different from the first flow path in the flow path through which the liquid flows, and is provided with a first filter portion which is the filter portion 30 disposed in the first flow path, and a second filter portion which is the filter portion 30 disposed in the second flow path. Here, the filter 100 only needs to have at least two or more flow paths and include the filter portion 30 disposed in each of the flow paths. The first flow path also has a first inflow path which is the inflow path 40 disposed in the first flow path, and a first outflow path which is the outflow path 50 disposed in the first flow path. Further, the second flow path has a second inflow path which is the inflow path 40 disposed in the second flow path, and a second outflow path which is the outflow path 50 disposed in the second flow path.

In the embodiment, the filter 100 has the A flow path to the J flow path, and the A filter portion 30a to the J filter portion 30j are disposed in the A to J flow paths, respectively. When the above-described first flow path indicates the A flow path, the above-described first filter portion indicates the A filter portion 30a. Moreover, the above-described second flow path indicates the B flow path to the J flow path, and the above-described second filter portion indicates the B filter portion 30b to the J filter portion 30j.

A flow path 1 shown in FIG. 1 indicates a flow path in the case in which the A flow path, in which a liquid flows from the inlet 10 to the outlet 20, is the above-described first flow path and indicates a flow path of the liquid flowing through the A filter portion 30a. In this case, the A filter portion 30a is disposed in the flow path 1 which is the first flow path.

In FIG. 1, the A filter portion 30a is disposed on a straight line that connects the inlet 10 and the outlet 20. The liquid flowing through the A flow path, which is the first flow path, is introduced from the inlet 10, passes through the A inflow path 40a, which is the first inflow path, and is then introduced into the A filter portion 30a. Then, the liquid flows from the A filter portion 30a to the outlet 20 via the A outflow path 50a which is the first outflow path. The A flow path is a linear flow path in which the liquid flows linearly from the inlet 10 to the outlet 20. In FIG. 1, the A flow path, that is, the first flow path, is shown as a flow path 1.

Furthermore, the B flow path in which the liquid flows in a detour from the inlet 10 to the outlet 20 is a flow path for the liquid flowing through the B filter portion 30b. The B filter portion 30b is disposed in the B flow path. In the case in which the A flow path is the first flow path, the B flow path is a second flow path that is at least partially different from the A flow path. In FIG. 1, the B flow path is shown as a flow path 2 as an example of the second flow path.

In FIG. 1, the B filter portion 30b is disposed to the left side LT of the A filter portion 30a. The liquid flowing through the B flow path is introduced from the inlet 10, flows through the A inflow path 40a which is the first inflow path and the B inflow path 40b which is the second inflow path in this order, and is then introduced into the B filter portion 30b. Then, the liquid flows from the B filter portion 30b through the B outflow path 50b which is the second outflow path and the A outflow path 50a which is the first outflow path, in this order, to the outlet 20. In FIG. 1, the A inflow path 40a and the B inflow path 40b have substantially the same flow path width, and the A outflow path 50a and the B outflow path 50b have substantially the same flow path width. Further, the A filter portion 30a and the B filter portion 30b have substantially the same size.

The B flow path which is the second flow path is a flow path over a longer distance through which the liquid flows than the A flow path which is the first flow path, and therefore the A flow path and the B flow path have different flow path resistances. Here, the flow path resistance indicates how difficult it is for a liquid to flow through the flow path. A small flow path resistance indicates that the liquid flows easily, and a large flow path resistance indicates that the liquid flows with difficulty.

In the filter 100, a length of the detour B flow path is longer than a length of the linear A flow path. Therefore, the flow path resistance applied to the liquid flowing through the B flow path is greater than the flow path resistance applied to the liquid flowing through the A flow path.

As a result, the liquid introduced from the inlet 10 into the filter 100 flows more easily into the A flow path than into the B flow path. Similarly, the contaminants U contained in the liquid flow more easily into the A flow path than into the B flow path, and more easily into the A filter portion 30a than into the B filter portion 30b. Therefore, the contaminants U tend to accumulate in the microtrap 31 of the A filter portion 30a before accumulating in the microtrap 31 of the B filter portion 30b. As a result, the flow of the liquid in the A flow path is likely to be obstructed earlier by the contaminants U than in the B flow path.

When the flow of the liquid is obstructed by the contaminants U, the flow path resistance of the flow path increases, and thus it is difficult for the liquid to flow. Therefore, as the liquid flows and the contaminants U are removed, the flow path resistance of the A flow path in which the A filter portion 30a is disposed becomes greater than the flow path resistance of the B flow path.

As a result, after the liquid starts flowing for a while, the liquid flows more easily through the B flow path than through the A flow path. In this way, in the flow path having a small flow path resistance and through which the liquid can easily flow, the flow path resistance increases as it is clogged with the contaminants U, and as a result, the liquid becomes more likely to flow to another flow path having a smaller flow path resistance. In this way, when the linear flow path in which the liquid flows linearly and the detour flow path in which the liquid flows in a detour are installed in parallel, the liquid will first flow through the linear flow path which has a smaller flow path resistance, and when the flow path resistance of the linear flow path increases due to clogging by the contaminants U, the liquid will gradually flow into the detour flow path. In addition, when a plurality of detour flow paths are installed in parallel, the liquid will first flow through the detour flow path with the smallest flow path resistance, and when the flow path resistance of the detour flow path increases due to clogging by the contaminants U, the liquid will flow to another detour flow path having the next flow path resistance size. The detour flow paths are flow paths that bypass the linear flow path and flow from the inlet 10 to the outlet 20.

Further, in FIG. 1, the C filter portion 30c is disposed further to the left side LT than the B filter portion 30b. Therefore, the C flow path (not shown) in which the C filter portion 30c is disposed is a flow path that has a longer length than the B flow path. That is, the C flow path is a detour flow path that is longer and detours further than the B flow path. Therefore, the flow path resistance of the C flow path is larger than the flow path resistance of the B flow path. As a result, the liquid tends to flow through the B flow path more easily than through the C flow path. After the liquid has been flowing for a while, when the B filter portion 30b disposed in the B flow path becomes clogged with the contaminants U, and the flow path resistance of the B flow path becomes greater than the flow path resistance of the C flow path, the liquid flows more easily through the C flow path than the B flow path.

Similarly, the D filter portion 30d to the J filter portion 30j are disposed on the left side LT in this order. Therefore, in the D flow path to the J flow path (not shown) in which the D filter portion 30d to the J filter portion 30j are disposed, the distance through which the liquid flows similarly becomes longer in the order of the D flow path to the J flow path. That is, the D flow path to the J flow path are further detoured in the order of the D flow path to the J flow path, and a distance over which the liquid flows becomes longer.

Therefore, in the D flow path to the J flow path, the flow path resistance increases in accordance with the length of the flow paths in this order. Similarly, in the D flow path to the J flow path, the liquid first flows through the flow path in which the flow path resistance is small and the liquid can flow easily, but after a while, when the flow path resistance of the flow path increases due to clogging by the contaminants U, the liquid then flows through the flow path having the next flow path resistance size. In the D flow path to the J flow path, a flow path disposed closer to the left side LT has a longer flow path length and a larger flow path resistance. As a result, in the D flow path to the J flow path, similarly, the liquid flows from the flow path (the D flow path in the example of FIG. 1) having the smallest flow path resistance and disposed closer to the right side RT, and then flows to another flow path (the flow path E in the example of FIG. 1) with the next smallest flow path resistance and disposed adjacent to the side in a direction of the left side LT. The D flow path to the J flow path are detour flow paths having different flow path resistances.

In the filter 100 shown in FIG. 1, since the A filter portion 30a, the B filter portion 30b, the C filter portion 30c to the J filter portion 30j are sequentially clogged in this order with the contaminants U, it is possible to prevent all (or most) of the filter portions 30 from becoming clogged in a short period of time and to prevent the entire (or most) flow of the liquid through the filter 100 from being obstructed. As a result, the contaminants U can be efficiently removed from the liquid.

Here, preferably, the flow path resistance of the filter portion 30 is set to be smaller than the flow path resistances of each of the inflow path 40 and the outflow path 50 in order to efficiently consume the filter in each of the flow paths (to make maximum use of the filter portion's ability to remove the contaminants U from the liquid). The flow path resistance of each of the inflow path 40 and the outflow path 50 is determined mainly by a length of the flow path and a size (a cross-sectional area of the flow path) of the cross section (a section obtained by cutting the flow path perpendicular to the direction in which the liquid flows in the flow path). A cross-sectional shape of each of the inflow path 40 and the outflow path 50 can be set to, for example, a circle, an ellipse, or a quadrangle. For example, when the flow paths are formed using a mold, the cross section of the flow path will be a shape close to a quadrangle, such as a rectangle or a square. On the other hand, the flow path resistance of the filter portion 30 is influenced by the length of the flow path and the size of the cross section, as well as a filter configuration (for example, the number of filter portions and the structure of the microtrap).

A width W1 of the inflow path 40 is preferably set to 0.1 mm or more and 1.0 mm or less. Here, the width of the inflow path 40 refers to a dimension in the direct flow direction F or the lateral direction C perpendicular to the direction in which the liquid flows in the cross section of the portion (the flow path). For example, the width of the B inflow path 40b through which the liquid flowing through the B flow path passes is a dimension in the direct flow direction F. The width of the inflow path 40 is preferably narrow in order to obtain a larger flow path resistance in a short flow path, and is preferably set to a width of 1.0 mm or less, but in consideration of the possibility that the inflow path 40 may be clogged by the contaminants, it is preferable to set the width to a size greater than 0.1 mm. On the other hand, a width W2 of the filter portion 30 is preferably set to be 0.1 mm or more and 3.0 mm or less. The width W2 of the filter portion 30 indicates a dimension in the lateral direction C of the cross section in a range in which the microtraps 31 are disposed. The width W2 of the filter portion 30 is often designed to be wider than the width W1 of the inflow path 40 as in the example shown in FIG. 1 in order to reduce the flow path resistance and install a larger microtrap, but is not limited thereto.

The flow path resistance of the inflow path 40 per unit length of the inflow path can be increased by setting the cross section of the inflow path 40 to be small (for example, by setting the width of the inflow path to be narrow). Thus, for example, it is possible to prevent the flow path resistance of the A flow path from becoming greater than the flow path resistance of the B flow path in a state in which the A filter portion 30a disposed in the A flow path is not sufficiently clogged with the contaminants U, and to prevent the liquid from flowing into the B flow path in the state in which the A filter portion 30a disposed in the A flow path is not sufficiently clogged with the contaminants U. By providing differences in the flow path resistance in the inflow paths 40 from the inlet to each of the filter portions 30 installed in parallel in this way, the contaminant removal function of each of the filter portions 30 installed in parallel can be utilized to the maximum extent possible, and as a result, the filter 100 can remove the contaminants U more efficiently.

The liquid introduced into the microtrap 31 from the inlet 10 flows through a flow path that passes through the inlet 40 and the filter inlet portion 33 and into the filter portion 30. Furthermore, the liquid introduced into the microtrap 31 flows through a flow path that passes through the filter outlet portion 34 and the outflow path 50 and to the outlet 20. For example, when comparing the A flow path, which is a linear flow path in which the liquid flows linearly from the inlet 10 to the outlet 20, and the B flow path, which is a detour flow path disposed on the left side LT of the flow path A, the flow path through which the liquid flows from the inlet 10 to the outlet 20 is longer in the B flow path than that in the flow path A by a total length of the inflow path 40 and the outflow path 50. As a result, the flow path resistance of the B flow path becomes greater than that of the A flow path which is a linear flow path in which the liquid flows linearly from the inlet 10 to the outlet 20.

A width of the outflow path 50, like the width of the inflow path 40, is set to be 0.1 mm or more and 1.0 mm or less. The flow path resistance of the outflow path 50 per unit length can be increased by setting the width of the outflow path 50 to be narrowed and reducing the cross section of the outflow path 50 to a degree that does not cause clogging. By increasing the flow path resistance per length of the outflow path 50, it is possible to prevent the flow path resistance of the A flow path from becoming greater than the flow path resistance of the B flow path in the state in which the A filter portion 30a disposed in the A flow path is not sufficiently clogged with the contaminants U, for example. As a result, similarly, the liquid is prevented from flowing into the B flow path in the state in which the A filter portion 30a disposed in the A flow path is not sufficiently clogged with the contaminants U. Therefore, the contaminant removal function of each of the filter portions 30 can be utilized to the maximum extent possible, and the contaminants U can be more efficiently removed. For ease of design and manufacture, it is preferable to set the width of the outflow path 50 to the same size as the width of the inflow path 40, but the present invention is not limited thereto. In the filter 100, the width of the outflow path 50 may be designed to be different from the width of the inflow path 40.

Here, a width (a width in a depth direction) of the inflow path 40 or the outflow path 50 in the up-down direction V can be set smaller than a width of the filter portion 30 in the up-down direction V, and the flow paths can be designed so that the differences in the flow path resistance between the parallel filter portions 30 become more pronounced. However, when the filter 100 is formed by joining the flow path plate and the lid in the up-down direction V, setting the width uniformly in the depth direction makes manufacturing the filter easier and reduces the cost. For this reason, preferably, the width of the filter portion 30 in the up-down direction V is set to be the same as the width of the inflow path 40 or the outflow path 50 in the up-down direction V, and the width (the dimension) of the inflow path 40 or the outflow path 50 in the direct flow direction F or the lateral direction C is changed to increase the differences in the flow path resistance between the parallel filter portions 30, which makes it easier to manufacture the filter 100.

The width in the depth direction of the inflow path 40, the outflow path 50 and the filter portion 30 of the filter 100 is preferably set to 500 µm or less, because when the width is too thick, the contaminant removal effect of the filter decreases. On the other hand, preferably, a lower limit of the width in the depth direction of the inflow path 40, the outflow path 50 and the filter portion 30 is larger than a size of the observation object. Therefore, when the observation object T is a cell having a normal size, preferably, the lower limit of the width in the depth direction of the inflow path 40, the outflow path 50 and the filter portion30 of the filter 100 is 10 µm or more.

The flow path resistance of the flow path may also be changed by narrowing the cross-sectional area of the filter inlet portion 33 or the filter outlet portion 34. In the example shown in FIG. 1, the widths of the filter inlet portion 33 and the filter outlet portion 34 are described as being approximately the same as the widths of the inflow path 40 and the outflow path 50. Therefore, the flow path resistance per length of the filter inlet portion 33 or the filter outlet portion 34 is approximately the same as the flow path resistance per length of the inflow path 40 or the outflow path 50, when the widths in the depth direction (the widths in the up-down direction V) are the same.

According to the embodiment, the filter 100 includes the inlet 10 through which a liquid is introduced, the outlet 20 through which the liquid is discharged, the first filter portion that is the filter portion 30 capable of removing the contaminants U from the liquid flowing from the inlet 10 to the outlet 20 and is disposed in a flow path through which the liquid flows from the inlet 10 to the outlet 20, and the second filter portion installed in the second flow path which has a flow path at least partially different from that of the first flow path and a flow path resistance different from that of the first flow path. In the embodiment, for example, the first filter portion is a filter portion (for example, the A filter portion 30a in FIG. 1 ) installed in a linear flow path in which the liquid flows linearly from the inlet 10 to the outlet 20, and the second filter portion is a filter portion (for example, the B filter portion 30b to the J filter portion 30j in FIG. 1 ) disposed in a detour flow path having a different flow path resistance. In the filter 100, the first filter portion and the second filter portion, which have different flow path resistances, are disposed in parallel with each other in the flow path through which the liquid flows from the inlet 10 to the outlet 20. In other words, the second filter portion is disposed in the second flow path that is at least partially different from the first flow path in which the first filter portion is disposed. With this configuration, in the filter 100, the liquid flowing through the first filter portion flows from the inlet 10 to the outlet 20 without passing through the second filter portion, and the liquid flowing through the second filter portion flows from the inlet 10 to the outlet 20 without passing through the first filter portion.

Therefore, it is possible to prevent all (or most) of the filter portions 30 from becoming clogged with the contaminants U in a short period of time, and to prevent the entire (or most) flow of the liquid flowing through the filter 100 from being obstructed. As a result, the contaminants U can be efficiently removed from the liquid, and the contaminant removal effect of the filter can be maintained for a longer period of time than in the past.

Although one embodiment of the present invention has been described in detail above with reference to the drawings, the specific configuration is not limited to the embodiment, and design changes and the like that do not deviate from the gist of the present invention are also included. Furthermore, the components shown in the above-described embodiment and the modified example shown below can be appropriately combined to form a configuration.

### (Modified example 1)

In the above embodiment, the filter 100 includes ten filter portions 30, namely, the A filter portion 30a to the J filter portion 30j, but the aspect of the filter is not limited thereto. The filter may include two or more filter portions in which flow paths having different flow path resistances are disposed in parallel. For example, the filter portion has a configuration in which the linear filter portion (the A filter portion 30a in FIG. 1) disposed in a linear flow path in which the liquid flows linearly from the inlet 10 to the outlet 20, and the detour filter portions (the B filter portion 30b to the J filter portion 30j in FIG. 1) installed in detour flow paths having different flow path resistances from the linear filter portion are disposed in parallel.

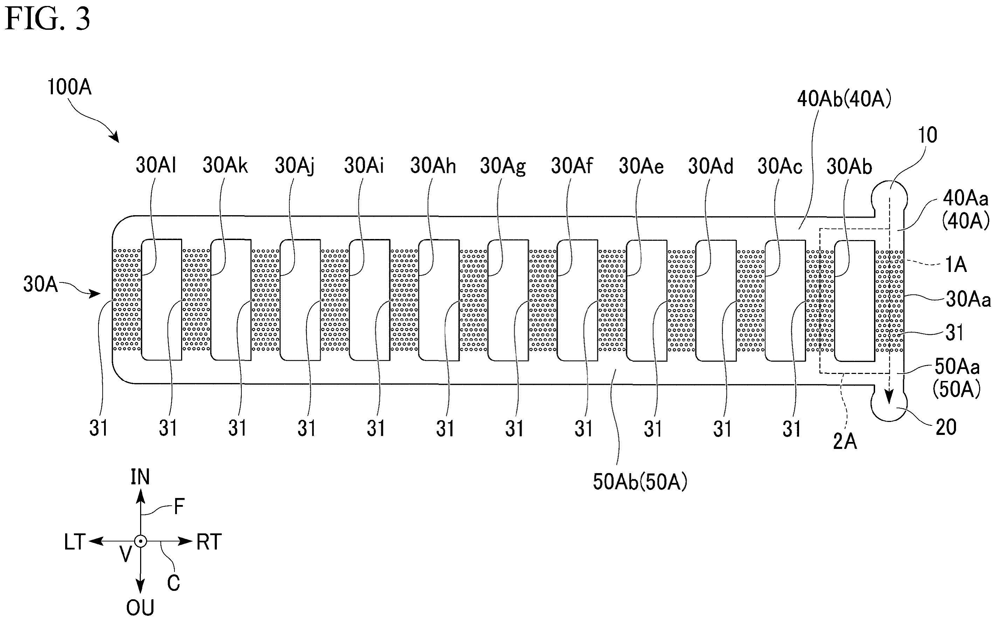

FIG. 3 is a front view showing an example of a configuration of a filter 100A according to Modified examples 1 to 3. The filter 100A includes 12 filter portions 30A, that is, an A filter portion 30Aa to an L filter portion 30Al. Here, each of the filter portions 30A has a microtrap 31, similar to the filter portion 30 in the above embodiment. Therefore, compared to the filter 100 in the above embodiment, the filter 100A has a larger number (an area) of microtraps 31 and can remove more contaminants U from the liquid than the filter 100. In this way, the number of filter portions may be changed appropriately according to required performance of removing the contaminants U, but it is preferable to have 10 or more and 30 or less in terms of the performance of removing the contaminants U.

### (Modified example 2)

In the above embodiment, the filter portion 30 has the filter inlet portion 33 and the filter outlet portion 34, but the aspect of the filter portion is not limited thereto. The filter portion does not necessarily have to have the filter inlet portion 33 and the filter outlet portion 34.

A filter portion 30A shown in FIG. 3 does not have the filter inlet portion 33 and the filter outlet portion 34 that are provided in the filter portion 30 according to the above embodiment. Since the filter 100A includes the filter portions 30A disposed in parallel in the lateral direction C, for example, a length (a total length of a B inflow path 40Ab which is the second inflow path, a B filter portion 30Ab, and a B outflow path 50Ab which is the second outflow path) of the B flow path in which a B filter portion 30Ab is disposed is longer than a length (a total length of an A inlet flow path 40Aa, which is the first inlet flow path, an A filter portion 30Aa, and an A outlet flow path 50Aa, which is the first outlet flow path) of the A flow path in which an A filter portion 30Aa is disposed. In FIG. 3, when the A flow path shown as an A flow path 1A is a first flow path, the B flow path shown as a flow path 2A is a second flow path which is at least partially different from the A flow path.

Therefore, a flow path resistance of the B flow path in which the B filter portion 30Ab is disposed is greater than a flow path resistance of the A flow path in which the A filter portion 30Aa is disposed. Similarly, flow path resistances of a C filter portion 30Ac to an L filter portion 30A1 disposed in parallel further to the left side LT become sequentially greater than that of the B flow path. As a result, even when the filter portion 30A does not have the filter inlet portion 33 and the filter outlet portion 34, by making the liquid to flow through the filter portions 30A disposed in flow paths having different flow path resistances, it is possible to prevent the entire (or most) flow of the liquid flowing through the filter 100A from being obstructed, and to efficiently remove the contaminants U from the liquid.

### (Modified example 3)

In the above embodiment, the width of each of the inflow path 40 and the outflow path 50 is narrower than the width of the filter portion 30, but the inflow path and the outflow path are not limited thereto. The width of each of the inlet path and the outflow path may be the same as or comparable to the width of the filter portion.

Widths of the inflow path 40A and the outflow path 50A shown in FIG. 3 are approximately the same as widths of the filter portions 30A. As described above, the A flow path and the B flow path have different flow path resistances because the A flow path and the B flow path have different flow path lengths. The filter is effective if it has filter portions and two or more flow paths having different flow path resistances are disposed in parallel, and even when the widths of the inflow path 40A and the outflow path 50A are approximately the same as the width of the filter portions 30A, the filter 100A can prevent the entire (or most) flow of the liquid from being obstructed, and can efficiently remove the contaminants U from the liquid.

### (Modified example 4)

In the above embodiment, the filter portion 30 includes the microtrap 31 in which two or more standing members 32 are disposed, but the aspect of the filter portion is not limited thereto. The filter portion is effective if it has a function of removing the contaminants U from the liquid, and may have, for example, a mesh-like microtrap that does not allow the contaminants U to pass through but allows the liquid and the observation object T to pass through. In this case, the mesh-like microtrap is disposed perpendicular to the flow direction F so that the liquid and the observation object T pass through gaps in the mesh and the contaminants U are caught in the mesh.

### (Modified example 5)

In the above embodiment, the filter 100 includes two or more filter portions 30 disposed in parallel at a certain distance apart, but the aspect of the filter is not limited thereto. The filter may include two or more filter portions disposed to be connected to each other.

For example, by providing a wall (a rib) to divide a flow path for one filter portion disposed in the flow path through which a liquid flows, it is possible to realize two or more filter portions disposed in different flow paths. In this case, the two or more filter portions separated by the wall are not separated from each other but are disposed connected to each other.

In two or more flow paths formed by dividing a flow path with a wall, for example, two or more flow paths having different flow path resistances can be formed by making the distances that liquid flows from the inlet to the outlet different using the wall. Therefore, since the filter has two or more filter portions disposed in the flow paths having different flow path resistances, it is possible to prevent the entire (or most) flow of the liquid from being obstructed, and to efficiently remove the contaminants U from the liquid.

### (Modified example 6)

In the above embodiment, although the example in which the filter 100 includes a plurality of filter portions 30 each having the same configuration has been described, the aspect of the filter is not limited thereto. The filter may include two or more filter portions 30 with different configurations of filter portions. For example, in the microtrap of the filter portion, the flow path resistance of the flow path through which the liquid flows may be changed by changing a density at which a plurality of standing members are disposed. For example, when the density of the standing members disposed in the flow path is low, the flow path resistance is low, and when the density is high, the flow path resistance is high. As a method for making a difference in flow path resistance between two or more flow paths, a shape of the filter portion may be changed instead of changing the length of the flow path.

### (Modified example 7)

In the above embodiment, the filter 100 includes one inlet 10 and one outlet 20, but the aspect of the filter is not limited thereto. The filter may include two or more inlets 10 or outlets 20.

### (Modified example 8)

In the above embodiment, although the example in which the filter 100 includes a plurality of filter portions 30 installed in the direct flow path and the detour flow path, but the aspect of the filter is not limited thereto. The filter 100 may have a plurality of filter portions 30 installed in parallel in detour flow paths having different flow path resistances.

The present invention will be described in detail below with reference to examples, but the present invention is not limited to the following examples.

### (Example)

The filter 100 shown in FIG. 1 was prepared as an example.

### (Comparative example)

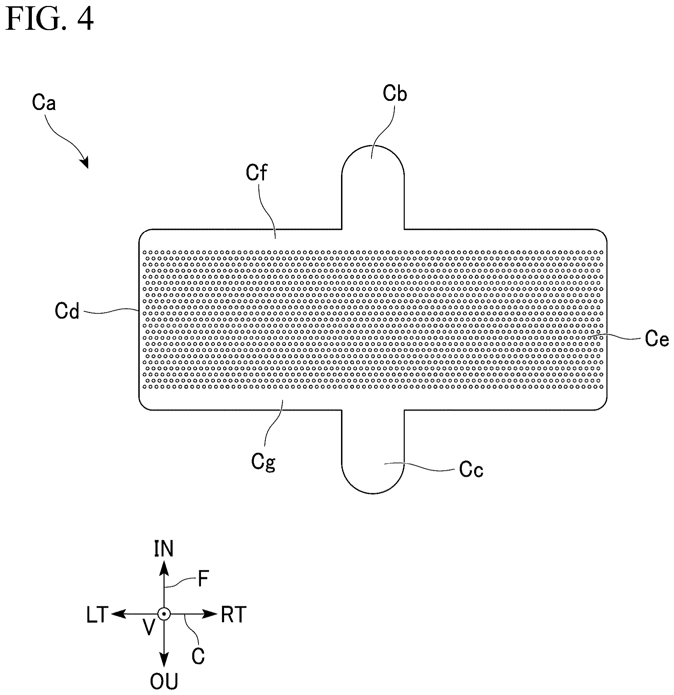

FIG. 4 is a front view showing a configuration of a conventional filter Ca as a comparative example. The filter Ca of the comparative example includes an inlet Cb, an outlet Cc, a filter portion Cd, an inflow path Cf, and an outflow path Cg. The filter portion Cd has a microtrap Ce. The microtrap Ce has a standing member 32 having the same size (a diameter of 50 µm) and shape (a cylindrical shape) as the microtrap 31 of the embodiment, and the distance D1 between the adjacent standing members 32 in the microtrap Ce was also set to 40 µm, as in the microtrap 31 of the embodiment.

The filter Ca of the comparative example has only one filter portion Cd. In addition, an area (a cross-sectional area when seen in the direction in which the liquid flows) of the microtrap Ce of the filter portion Cd is the same as the sum of areas of all the microtraps 31 of the A filter portion 30a to the J filter portion 30j of the embodiment. Moreover, the dimension in the direct flow direction F of the filter portion Cd of the comparative example is the same as the dimension in the direct flow direction F of the filter portion 30 of the embodiment.

The liquid flowing through the filter Ca of the comparative example is introduced from the inlet Cb into the filter portion Cd through the inflow path Cf, and discharged from the outlet Cc through the outflow path Cg. That is, the flow path through which the liquid flows does not branch, and the contaminants U are removed by one filter portion Cd disposed in one flow path.

### (Experiment)

In the filter 100 of the embodiment and the filter Ca of the comparative example, a liquid was allowed to flow for 70 minutes, and a degree of clogging of the filter portion with the contaminants U was observed. In the experimental example, the objects to be observed contained in the liquid were cells (Hela cells), and the contaminants were aggregates of contents leaking from the cells. In the experimental example, a cell concentration in the liquid was 3×10⁶ cells/ml, and the liquid was flowed at a speed of 20 µm/min.

### (Experimental results)

In the filter Ca of the comparative example, after the liquid containing cells had been flowing for 70 minutes, it became difficult to continue flowing the liquid at the same speed. In contrast, in the filter 100 of the embodiment, the liquid containing cells was able to flow at the same speed even when the liquid was allowed to flow for 70 minutes.

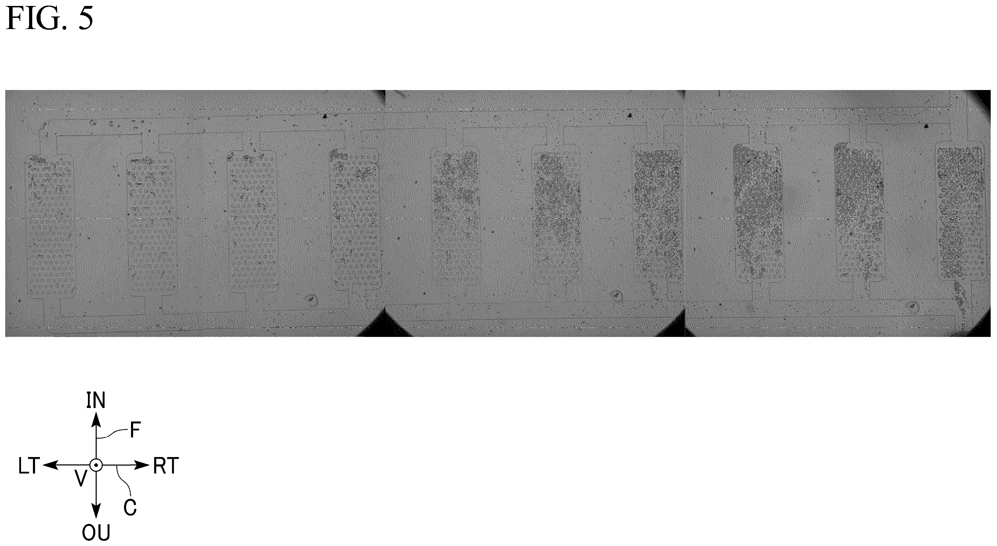

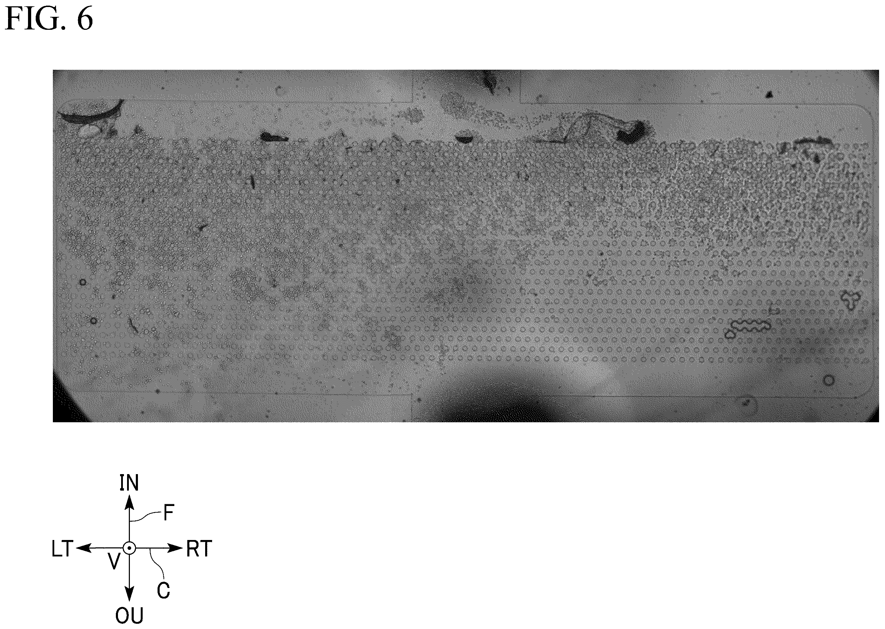

FIGS. 5 and 6 show observation results of the filter 100 of the embodiment and the filter Ca of the comparative example at the end of the experiment (when the liquid had been flowing for 70 minutes). FIG. 5 is an image showing the observation result of the filter 100 of the embodiment. FIG. 6 is an image showing the observation result of the filter Ca of the comparative example. As shown in FIG. 6, in the filter Ca of the comparative example, the inlet side IN of the filter portion Cd is clogged with the contaminants over almost the entirety in the lateral direction C, and no flow paths unclogged with the contaminants remain.

On the other hand, when the filter 100 of the embodiment was observed at the end of the experiment (when the liquid had been flowing for 70 minutes), as shown in FIG. 5, in the filter portions 30 disposed in parallel in the lateral direction C, it can be seen that the A filter portion 30a to the E filter portion 30e disposed on the right side RT are clogged with the contaminants over almost the entirety in the lateral direction C. However, it can be seen that the F filter portion 30f to the J filter portion 30j disposed on the left side LT are hardly clogged with the contaminants. In particular, it can be seen that, in the H filter portion 30h to the J filter portion 30j, almost no contaminants are caught in the microtrap 31, and the contaminant removal capability of the microtrap is almost maintained in the H filter portion 30h to the J filter portion 30j.

In the filter Ca of the comparative example shown in FIG. 6, the outlet side OU of the filter portion Cd is hardly clogged with the contaminants. In contrast, in the filter 100 of the embodiment shown in FIG. 5, it can be seen that the A filter portion 30a to the E filter portion 30e, which are clogged with a large amount of contaminants, are clogged with the contaminants from the inlet side IN to the back of the outlet side OU.

As shown in the results of the experimental example, in the filter Ca of the comparative example, after the liquid was flowed through it for 70 minutes, most of the filter portion Cd in the lateral direction C became clogged with the contaminants, and the flow of liquid was obstructed. In contrast, in the filter 100 of the embodiment, the filter portion 30 remained with almost no clogging of the contaminants, and the flow of the liquid was maintained without being obstructed. Furthermore, as shown in FIG. 5, in the filter 100 of the embodiment, the filter portions 30 clogged with the contaminants are uniformly clogged with the contaminants from the inlet side IN to the outlet side OU, and it can be seen that almost the entire filter portions 30 are effectively utilized and the contaminants can be efficiently removed.

### REFERENCE SIGNS LIST

100, 100A Filter
10 Inlet
20 Outlet
30, 30A Filter portion
31 Microtrap
32 Standing member
30a, 30Aa A filter portion
30b, 30Ab B filter portion
40, 40A Inflow path
40a, 40Aa A inflow path (first inflow path)
40b, 40Ab B inflow path (second inflow path)
50, 50A Outflow path
1, 1A Flow path (A flow path, linear flow path)
2, 2A Flow path (B flow path, detour flow path)
T Observation object
U Contaminant
W1 Width of inflow path
W2 Width of filter portion
D1 Distance between standing members
D2 Diameter (diameter of standing member)
F Direct flow direction (flow direction)
C Lateral direction

## Claims

1. A filter comprising:
an inlet through which a liquid is introduced;
an outlet through which the liquid is discharged;
a flow path through which the liquid flows from the inlet to the outlet;
a first filter portion which is a filter portion configured to remove contaminants from the liquid and is disposed in a first flow path that is the flow path; and
a second filter portion which is a filter portion and is disposed in a second flow path that is the flow path at least partially different from the first flow path,
wherein the first flow path and the second flow path have different flow path resistances.

2. The filter of claim 1, wherein the flow path includes an inflow path that connects the inlet and the filter portion,
the inflow path includes a first inflow path disposed in the first flow path and extends in a direct flow direction that connects the inlet and the outlet, and a second inflow path disposed in the second flow path and configured to branch from the first inflow path and to extend substantially perpendicular to the direct flow direction, and
the first filter portion and the second filter portion are disposed in parallel in a direction in which the second inflow path extends.

3. The filter of claim 2, wherein the first filter portion and the second filter portion are the same filter portion.

4. The filter of claim 3, wherein the second flow path is constituted by a plurality of detour flow paths having different flow path resistances, and
the second filter portions are installed in parallel with each other in the direction in which the second inflow path extends in each of the plurality of detour flow paths.

5. The filter of claim 4, wherein the filter portion has two or more standing members that extend substantially perpendicular to a flow direction of the liquid that flows through the filter portion.

6. The filter of claim 5, wherein the plurality of second filter portions provided in the plurality of detour flow paths are the same as each other, and
the plurality of second inflow paths that connect the inlet and the plurality of second filter portions have the same area of cross sections perpendicular to a flow direction of the liquid flowing through the second flow paths, and have different lengths in the flow direction.

7. The filter of claim 1, wherein an inflow path that connects the inlet and the filter portion is provided, and
an area of a cross section of the inflow path perpendicular to a flow direction of the liquid is smaller than an area of a cross section of the filter portion perpendicular to the flow direction of the liquid.

8. The filter of claim 6 or 7, wherein a shape of a cross section of the inflow path is a quadrangle, and
a width of the cross section of the inflow path is 0.1 mm or more and 1.0 mm or less.

9. The filter of claim 8, wherein a width of the filter portion is 0.1 mm or more and 3 mm or less.

10. The filter of claim 1, wherein the filter portion has two or more standing members that extend substantially perpendicular to a flow direction of the liquid flowing through the filter portion, and
a distance between the adjacent standing members is 20 µm or more and 50 µm or less.

11. The filter of claim 1, wherein the filter portion has two or more standing members that extend substantially perpendicular to a flow direction of the liquid flowing through the filter portion, and
the standing members have a substantially cylindrical shape with a diameter of 10 µm or more and 200 µm or less.

12. The filter of claim 1, wherein the first flow path is a linear flow path in which the liquid flows linearly from the inlet to the outlet, and
the second flow path is a detour flow path in which the liquid flows from the inlet to the outlet by bypassing the linear flow path, and is a flow path through which the liquid flows longer than the first flow path.

13. The filter of claim 1, wherein the first flow path and the second flow path are detour flow paths in which the liquid flows from the inlet to the outlet by bypassing a linear flow path in which the liquid flows linearly from the inlet to the outlet.
